# DEMANDE DE BREVET EUROPEEN

(11) **EP 1 698 973 A2**
(43) Date de publication de la demande: **06.09.2006**
(21) Numéro de dépôt: 06368003.7
(22) Date de dépôt: 03.03.2006
(51) Int. Cl.: G06F 9/38

(54) **Dispositif de génération de suivi de branchement pour microprocesseur et microprocesseur doté d'un tel dispositif**

(30) Priorité: 04.03.2005 FR 0502187
(71) Demandeur: STMicroelectronics SA, 92120 Montrouge (FR)
(72) Inventeur: Alofs, Thomas, 38100 Grenoble (FR)
(74) Mandataire: Schuffenecker, Thierry

(57) **Abrégé**

1. Dispositif de génération d'un suivi d'adresses de saut pour un microcontrôleur, un microprocesseur ou une unité de traitement d'information doté d'un régime d'instructions comportant au moins une instruction conditionnelle et au moins une instruction de type multi-cycle, ledit dispositif comportant :
   - des moyens pour recevoir un premier signal (VALID) caractéristique d'une instruction réellement exécutée ;
   - des moyens pour recevoir un second signal (EXP) caractéristique d'une instruction de type multi-cycle ;
   - des moyens pour recevoir un troisième signal (DISC) caractéristique d'un saut de discontinuité entre une adresse de source et une adresse de destination d'un programme exécuté dans ledit microcontrôleur, microprocesseur ou ladite unité de traitement.
   - des moyens de stockage des adresses consécutives présentées par le pointeur d'adresses (10, 20, 30) ;
   - des moyens de traitement (50) desdits premier, second et troisième signal de manière à déterminer, le cas échéant, un couple formé d'une adresse de source et d'une adresse de destination pour un saut d'adresse ;
   - des moyens de stockage (40) dudit couple d'adresse.

## Description

### Domaine technique de l'invention

La présente invention concerne le domaine des systèmes électroniques comportant un microprocesseur et notamment un dispositif de suivi de branchement pour microprocesseur.

### Etat de la technique

L'utilisation des microprocesseurs s'est généralisé dans tous les systèmes électroniques. On trouve à côté des microcontrôleurs les plus simples (tel que 80C51 du constructeur INTEL Corp. ) des microprocesseurs particulièrement sophistiqués et performants et notamment des processeurs de traitement du signal *(Digital Signal Processor* ou D.S.P.) .

Les processeurs les plus évolués sont basés sur un jeu d'instructions complexes comportant notamment des instructions conditionnelles (ou *Predicated instruction* dans la littérature anglo-saxonne) ainsi que des instructions multi-cycle (ie *Expanded instructions* dans la littérature anglo-saxonne).

On trouve ainsi des instructions conditionnelles dans des processeurs de type TIC62x DSP du constructeur Texas Instrument, dans des processeurs Itanium du fabricant INTEL, ou encore dans la famille StarCore SCx DSP du constructeur Motorola etc... On rencontre les instructions de type Multi-cycle dans des processeurs tels que Itanium de chez Intel ® , ADSP Blackfin du constructeur Analog Devices ® ainsi que dans les noyaux DSP de la famille ST100 du constructeur STMicroelectronics S.A. ®.

La présence d'instructions conditionnelles (PREDICATED) ou multi-cycle (EXPANDED) rend difficile l'opération de déverminage et plus généralement le test des fonctionnalités d'un programme écrit en assembleur. En effet, d'une part, s'agissant des instructions conditionnelles, il s'avère que celles-ci peuvent ne pas être exécutées et, d'autre part, s'agissant des instructions de type Multi-cycle, celles-là provoquent l'exécution en cascade de sous instructions rendant difficile la lecture et l'interprétation des fichiers classiques de suivi de sauts (BRANCH TRACE).

D'une manière générale, le fichier classique de suivi de branchement (BRANCH TRACING) généré lors du déroulement de programme ne permet pas aisément aux programmeurs de suivre le déroulement du programme tel qu'il est réellement exécuté, ce qui ne facilite guère la détection des erreurs de programmation et leur correction.

Il est souhaitable de pouvoir disposer d'un mécanisme simple et efficace de suivi de branchement (BRANCH TRACE) parfaitement adapté aux instructions évoluées de type PREDICATED et MULTI-CYCLE .

Tel est le but à résoudre pour la présente invention.

### Exposé de l'invention

La présente invention a pour objet un nouveau mécanisme de suivi de branchement adapté à l'utilisation d'instructions conditionnelles ou multi-cycles que l'on rencontre dans les processeurs de dernière génération incluant les jeux d'instructions conditionnelles et Multi-cycle.

La présente invention a pour but un mécanisme de suivi de branchements performant assurant le suivi de sauts et branchements (BRANCH TRACE) adapté aux microprocesseurs supportant les instructions conditionnelles (PREDICATED) et de type MULTI-CYCLE.

C'est un troisième but de la présente invention de réaliser un outil de correction d'erreurs de programmation efficace, adapté à la structure des microprocesseurs sophistiqués intégrant les instructions conditionnelles et les instructions Multi-cycle.

L'invention réalise ces buts au moyen d'un dispositif de génération d'un suivi d'adresses de saut qui comporte :
- des moyens pour recevoir un premier signal (VALID) caractéristique d'une instruction réellement exécutée ;
- des moyens pour recevoir un second signal (EXP) caractéristique d'une instruction de type multi-cycle ;
- des moyens pour recevoir un troisième signal (DISC) caractéristique d'un saut de discontinuité entre une adresse de source et une adresse de destination d'un programme exécuté ;
- des moyens de stockage des adresses consécutives présentées par le pointeur d'adresses;
- des moyens de traitement des signaux VALID, EXP et DISC de manière à déterminer, le cas échéant, un couple formé d'une adresse de source et d'une adresse de destination pour un saut d'adresse ;
- des moyens de stockage de type FIFO du couple d'adresse automatiquement généré.

Dans le mode de réalisation préféré, le dispositif comporte
- un premier registre recevant la valeur courante du pointeur d'adresse présentée par ledit microcontrôleur, microprocesseur ou ladite unité de traitement ;
- un second registre disposant d'une entrée et d'une sortie ;
- un premier multiplexeur disposant d'une sortie, d'une première entrée connectée sur la sortie dudit premier registre et d'une seconde entrée connectée sur sa propre sortie, et étant commandé par ledit signal VALID de manière à permettre soit le stockage du contenu dudit premier registre, soit le recyclage de la valeur précédemment stockée dans ledit second registre.

Le dispositif comporte plus particulièrement :
- un troisième registre disposant d'une entrée et d'une sortie ;
- un second multiplexeur disposant d'une sortie et d'une première entrée connectée à la sortie dudit second registre et d'une seconde entrée connectée sur sa propre sortie, ledit second multiplexeur étant commandé par un premier signal de commande (FSM1) généré par une machine d'état.

Un troisième multiplexeur comporte un première entrée connectée sur la sortie du troisième registre et d'une seconde entrée connectée sur la sortie du second registre, et d'une sortie connectée audit moyen de stockage (FIFO). Le troisième multiplexeur est commandé par un second signal de commande (FSM2) généré par ladite machine d'état.

De préférence, la machine d'état recevant les premier, second et troisième signaux (VALID, EXP, DISC) est une machine d'état à 3 états, laquelle permet la génération des signaux de commande (FSM1, FSM2) pour les second et troisième multiplexeurs, ainsi que le signal d'écriture dans la mémoire FIFO.

### Description des dessins

D'autres caractéristiques, but et avantages de l'invention apparaîtront à la lecture de la description et des dessins ci-après, donnés uniquement à titre d'examples non limitatifs. Sur les dessins annexés :
La figure 1 illustre un premier exemple de génération d'un fichier de suivi de branchement (BRANCH TRACE) pour un programme en assembleur.
La figure 2 illustre un second exemple de génération d'un fichier de branchement (BRANCH TRACE) dans le cas d'instructions conditionnelles.
La figure 3 illustre un mécanisme de génération de suivi de branchements (BRANCH TRACE) conforme à la présente invention.

### Description d'un mode de réalisation préféré

Afin de clarifier l'exposé, on rappelle que, d'une manière générale, le traçage de l'exécution d'un programme se fait au moyen de la génération d'un fichier de traçage (ou Branch Trace ) qui comporte le suivi des sauts du pointeur d'adresses (ou *Program Counter)* lorsque intervient une discontinuité du pointeur d'adresse suite à une instruction de saut telle que JUMP, CALL, GOTO etc...

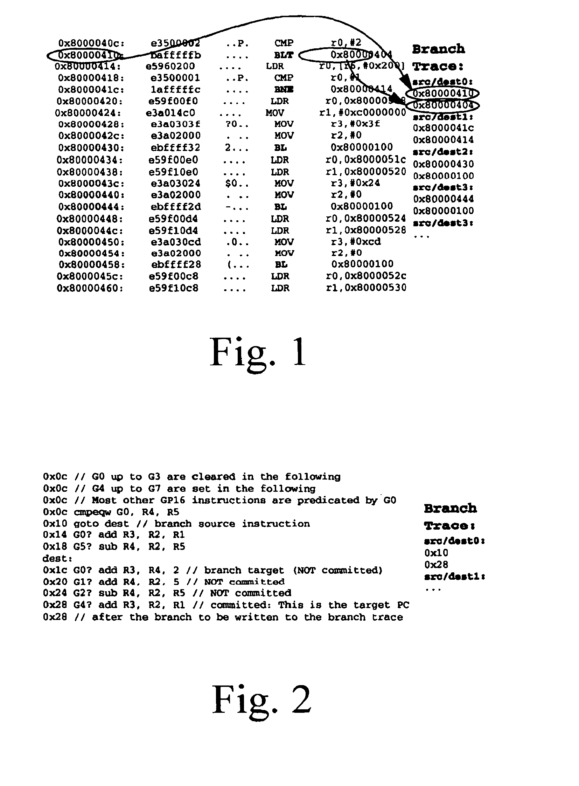

En pratique, comme on le voit dans la figure 1, chaque couple du fichier BRANCH TRACE comporte une première adresse indiquant l'adresse de départ (par exemple 0x80000410 indiquée sur la figure), et l'adresse de destination (0x80000404) du saut d'instruction.

Lorsque l'instruction à exécuter est de type conditionnelle, on observe que la première instruction exécutée qui suit un saut (résultant d'un JUMP, GOTO ou CALL par exemple) n'est pas forcément l'instruction placée directement après la discontinuité ou le saut. En effet, cette dernière pouvant être une instruction conditionnelle, elle peut ne pas être exécutée dans certains cas et , par conséquent, il est nécessaire que le fichier de suivi du SAUT (BRANCH TRACE) indique clairement quelle est la première instruction exécutée après la discontinuité. La figure 2 montre un exemple de programme en assembleur comportant, à l'adresse 0x10 une instruction GOTO provoquant un saut vers l'adresse 0x1c. A partir de l'adresse de destination 0x1c, on trouve une séquence de quatre instructions conditionnelles respectivement associées à quatre variables G0, G1, G2 et G4 (dénommées GUARD dans la littérature anglo-saxonne). Si le contenu des variables G0, G1, G2, G4 est tel que les trois premières instructions (correspondant aux adresses 0x1 c, 0x20 et 0x24) ne seront pas exécutées, on constate alors que la première instruction exécutée immédiatement après le saut ou la discontinuité d'adresse est l'instruction de l'adresse 0x28.

Pour permettre aux programmeurs de détecter et de corriger facilement les erreurs de programmation, il est souhaitable que le suivi des discontinuité (ou BRANCH TRACE) rende compte de l'exécution réelle du programme et mentionne directement les sauts d'adresses du compteur d'adresse (ou *Program Counter)* comme cela est indiqué dans la figure 2 où l'on voit l'enregistrement du couple (0x10, 0x28) indiquant clairement le saut de 0x10 vers 0x28. Ainsi le programmeur pourra t'il, sans ambiguïté, identifier la première instruction exécutée après le saut, à savoir l'instruction correspondant à l'adresse 0x28.

En ce qui concerne les instructions de type MULTI-CYCLE, on constate que ces dernières génèrent l'exécution d'une séquence de sous-instructions. Le cas typique est l'instruction PUSHx (resp. POPx) qui provoque l'exécution de multiples sous instructions de type LOAD (resp. STORE). Dans une telle situation, il est également souhaitable, pour faciliter les opérations de correction des programmeurs, que le suivi des branchements tienne également compte de l'existence potentielle d'instructions multi-cycle (telles que PUSH ou POP par exemple), c'est à dire dont l'exécution provoque le déroulement de sous instructions en cascades (telle que STORE ou LOAD par exemple).

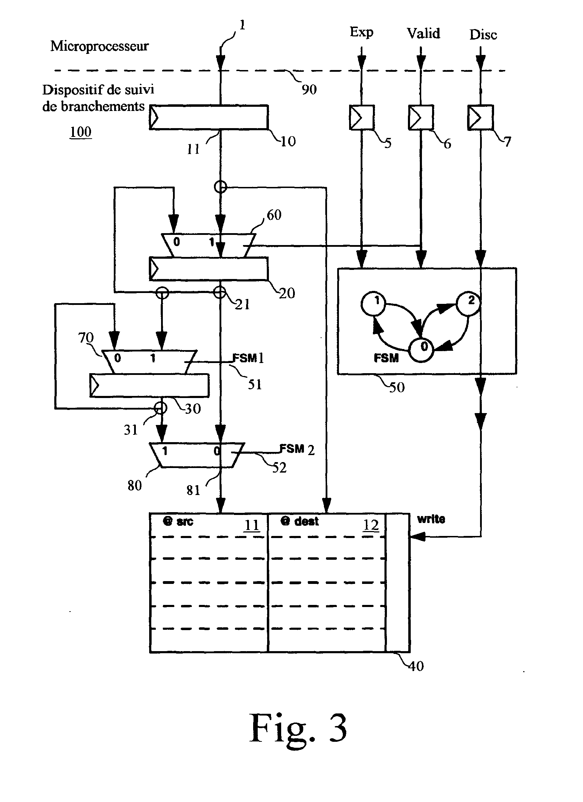

La figure 3 illustre le schéma de principe d'un mécanisme conformément à la présente invention qui permet de générer avantageusement un fichier de suivi de saut d'instructions rendant compte de l'exécution réelle des instructions conditionnelles et de type MULTI-CYCLE.

Comme on le voit sur la figure, l'invention comporte un dispositif 100 de suivi des branchements qui est connecté via une interface 90 à un processeur de type quelconque, mais intégrant un jeu d'instructions conditionnelles (ou *predicated* ) ainsi qu'un jeu d'instructions de type multi-cycle (ou *expanded*), telle que PUSH ou POP. Clairement, l'homme du métier pourra adapter l'enseignement de l'invention à tout processeur particulier , tel qu'un microcontrôleur, un microprocesseur, un processeur de traitement du signal (D.S.P.) etc....

L'interface 90 entre le processeur permet le transfert de l'adresse 1 du pointeur d'adresse *(Program Counter* ou *PC)* qui, comme on le sait , porte l'adresse courante de l'instruction exécutée. En outre, l'interface comporte trois signaux de commande EXP , VALID et DISC qui sont définis ci-après :
EXP *(Expanded)* est un signal qui est à un état 1 lorsque l'instruction correspondant à l'adresse courant est une instruction de type Multi-cycle.

VALID (*predicated*) est un signal qui est à un état 1 lorsque l'instruction conditionnelle est réellement exécutée.

DISC (Discontinuité) est un signal qui passe à un état actif dès lors que le processeur détecte un saut ou une discontinuité d'adresse dans le déroulement d'un programme. Plus précisément, DISC passe a un état actif des lors que le PC de destination d'une discontinuité est présente sur l'entrée 1 (Cf. figure 3).

Les trois signaux de commande EXP, VALID et DISC sont respectivement stockés dans des registres 5, 6 et 7 et transmis à une machine d'état 50. Par souci de commodité, on considérera, dans la suite de ces développement les signaux DISC, EXP et VALID comme ceux issus de la sortie des bascules 5, 6 et 7, que l'on ne confondra pas (du point de vue des cycles d'horloge) avec les signaux d'entrée de ces mêmes bascules.

Le dispositif de suivi de saut comporte ensuite trois registres, respectivement 10, 20 et 30 disposant respectivement d'une sortie 11, 21 et 31.

Le dispositif comporte également un premier multiplexeur 60 disposant d'une première entrée connectée à la sortie 11 du registre 10 et d'une seconde entrée connectée à la sortie 21 du registre 20. Le multiplexeur dispose d'une sortie connectée à l'entrée du registre 20 et est commandé par le signal VALID, stocké dans le registre 6. Il en résulte que, lorsque ce signal VALID est égal à 1 , c'est la valeur stockée dans le registre 10 qui est transmise à la sortie du multiplexeur 60 lors du cycle suivant. Inversement, lorsque VALID est égal à 0, alors, lors du cycle suivant, c'est la sortie du registre 20 qui se trouve recyclée et réinjectée à l'entrée de ce même registre via le multiplexeur 60.

Le dispositif comporte également un second multiplexeur 70 disposant d'une première entrée connectée à la sortie 21 du registre 20 et d'une seconde entrée connectée à la sortie 31 du registre 30. Le multiplexeur dispose d'une sortie connectée à l'entrée du registre 30 et est commandé par un signal FSM1 généré par la machine d'état 50. Lorsque FSM1 est à 1, alors la sortie du registre 20 est directement transmise à l'entrée du registre 30 et, inversement, lorsque FSM1 est égal à 0, alors c'est la sortie du registre 30 qui se trouve recyclée à l'entrée et, par conséquent, c'est le contenu de ce même registre qui se trouve alors recyclé via le multiplexeur 70.

Le dispositif comporte enfin un troisième multiplexeur 80 disposant d'une première entrée connectée à la sortie 21 du registre 20 et d'une seconde entrée connectée à la sortie 31 du registre 30. Le multiplexeur 80 dispose d'une sortie 81 et est commandé par un signal de commande FSM2 généré par la machine d'état 50 en sorte que lorsque FSM2 = 1 alors c'est la sortie 31 du registre 30 qui est transmis à la sortie 81 du multiplexeur. Inversement, lorsque FSM2=0, c'est le signal sur la sortie 21 qui est transmis en sortie 81 de ce même multiplexeur.

La sortie 81 multiplexeur 80 est connectée à l'entrée @SRC (adresse source) d'une mémoire 40 de type FIFO, laquelle dispose d'une entrée @DEST (adresse destination) qui est connectée à la sortie 11 du registre 10. La mémoire FIFO est tout type de mémoire fonctionnant suivant un principe « premier-entré, premier sorti » et dispose d'une commande d'écriture WRITE qui est, elle-aussi, générée par la machine d'état 50.

La machine d'état 50 reçoit les trois signaux d'entrée EXP, VALID et DISC respectivement stockés dans les registres 5, 6 et 7 et comporte trois états distincts permettant de générer les signaux FSM1, FSM2 et le signal d'écriture WRITE dans la mémoire FIFO.

On décrit à présent plus particulièrement le fonctionnement du dispositif selon l'invention.

D'une manière générale, les registres sont commandés par un signal d'horloge qui est celui du microprocesseur. A chaque cycle d'horloge, le microcontrôleur ou microprocesseur envoie l'adresse courante du pointeur d'adresse ainsi qu'un signal DISC actif (=1) dès lors que le déroulement du programme tombe sur une discontinuité (ie un PC de destination conformément aux développements précédents concernant le signal DISC).

La machine d'état 50 passe d'un état 0 à un état 1 en présence simultanée des deux conditions VALID= 0 et DISC= 1 sont simultanément présentes. Cette machine revient de l'état 1 à l'état 0 lorsque le signal VALID commute de l'état 0 à l'état 1.

Par ailleurs la machine d'état 50 passe d'un état 0 à un état 2 lorsque les conditions suivantes sont satisfaites : DISC = 0 et EXP = 1 et VALID = 1.Le retour de l'état 2 vers l'état 0 intervient lorsque les conditions sont satisfaites : VALID = 1 , DISC = 1 et EXP = 1

Enfin, la machine d'état génère les signaux FSM1 et FSM2 conformément aux formules suivantes :
FSM1 est actif lorsque les conditions suivantes sont remplies : DISC = 0, VALID = 1, EXP = 1
FSM2 est actif lorsque les conditions suivantes sont remplies : DISC = 1, VALID = 0, EXP = 1 et la machine d'état étant dans l'état 2 (FSM=2).

Ainsi que le signal d'écriture :
WRITE est activé lorsque l'on a la condition suivante: (FSM = 0, VALID = 1, DISCONT = 1) OU (FSM = 1, VALID = 1) OU (FSM = 2, DISC = 1)

Comme on va le constater, le dispositif décrit permet de stocker les couples (adresse source @SRC , adresse destination @DEST) aussi bien pour des instructions conditionnelles que pour des instructions de type Multi-cycle.

### A. Instructions conditionnelles

Considérons par exemple le programme illustré dans la figure 2, et notamment le déroulement du programme avant le saut de l'adresse 0x10. On suppose que la machine d'état 50 est dans un état 0.

Lors du cycle précédent au saut, (cycle 1), le bus 1 véhicule l'adresse **0x0c** et un signal Valid = 1 qui est alors chargée dans le registre 10, 6.

Lors du cycle suivant (cycle 2), la valeur **0x10** est présentée sur le bus du pointeur d'adresse 1. Le signal de commande VALID étant actif (ce qui correspond à l'hypothèse d'une instruction réellement exécutée), le multiplexeur 60 transmet le signal présent sur sa première entrée (signal de sortie 11) à l'entrée du registre 20. La valeur précédemment stockée dans le registre 10 ― à savoir 0x0c - passe alors dans le registre 20 tandis que la valeur d'adresse courante 0x10 est stockée dans le registre 10.

L'instruction suivante 0x10 correspondant à une instruction de saut, le signal de discontinuité DISC se trouve activé.

Le cycle suivant (cycle 3), le pointeur d'adresse présente la valeur **0x1c** qui est stockée dans le registre 10 tandis que la valeur précédemment stockée - à savoir 0x10 ― passe dans le registre 20.

Comme l'instruction correspondante n'est pas exécutée puisque l'on considère que, par hypothèse la condition G0 est à un état bas, alors le signal VALID est à un état 0, ce qui provoquera, au cycle d'après, le recyclage du contenu du registre 20 - à savoir 0x10 - par le multiplexeur 60.

La présence simultanée des deux conditions VALID= 0 et DISC= 1 entraîne le passage de la machine d'état 50 de l'état 0 à l'état 1. La machine d'état reste dans cet état 0 tant que VALID reste à 0.

De ce fait, aucune des adresses suivantes **0x20** (cycle 4) et **0x24** (cycle 5) ne permettent un retour à l'état 0 puisque, par hypothèse, les variables G1 et G2 sont égales à 0, entraînant le maintien du signal VALID à un état 0. Pendant ces deux cycles correspondant à deux adresses 0x20 et 0x24 non exécutées, on constate que le registre 20 conserve la valeur initiale stockée, à savoir 0x10 qui est la valeur du pointeur d'adresse de source (@SRC).

La présentation de l'adresse **0x28** (cycle 6), correspondant à une instruction réellement exécutée (puisque G4 est par hypothèse égal à 1), va provoquer le retour de la condition VALID = 1 et, par suite, le retour vers l'état 0 de la machine d'état 50, entraînant ainsi la commande d'écriture WRITE dans la FIFO.

Le signal FSM2 étant à 0, on constate donc que l'on écrit dans la FIFO un couple de deux adresses : une première adresse qui est le contenu du registre 20, à savoir 0x10 qui est l'adresse de source du saut (@SRC), et une seconde adresse qui est l'adresse 0x28 qui est l'adresse de destination (@DEST).

Ce couple d'adresse (0x10, 0x28) identifie bien un saut d'adresse depuis une adresse de source vers une adresse de destination qui correspond bien à une adresse réellement exécutée.

On va montrer à présent que le dispositif est tout aussi efficace dans le cas d'une instruction de type MULTI-CYCLE.

### B. Instructions de type MULTI-CYCLE

Considérons à présent le cas d'un programme intégrant des instructions de type multi-cycle, telles que PUSHx ou POPx. Dans un tel contexte, on considérera à présent que le signal VALID restera à 1.

Considérons plus particulièrement l'exemple d'une instruction de saut (CALL) à une adresse 0x10, appelant une instruction PUSH présente à une adresse 0x20. Le programme en assembleur pourrait se présenter comme ce qui suit :
*0x10 Call Sub*
...
...
*0x20: Push*
*0x24: Add*
*0x28: Sub*
...
*0x34 Return*

L'instruction PUSH provoque le déroulement d'une série de sous-instructions, par hypothèse toutes considérées à la même adresse 0x28 :
*STORE R0*
*STORE R1*
*STORE R2*
...
*STORE R15*

On décrit à présent le déroulement des opérations.

Lors d'un premier cycle, le processeur exécute l'instruction présente à l'adresse 0x10 tandis que cette même adresse est stockée dans le registre 10. L'instruction CALL SUB est alors décodée et l'on effectue un saut à l'adresse 0x20.

Lors d'un second cycle, l'adresse 0x20 est présentée sur le bus 1 et stockée dans le registre 10 tandis que la valeur d'adresse précédemment stockée dans ce même registre (soit 0x10) est stockée dans le registre 20 via le multiplexeur 60. En même temps, le processeur ayant détectée la présence d'une instruction multi-cycle (ou *Expanded),* active le signal de commande EXP. Mais il est à noter que le signal DISC reste à l'état bas jusqu'à la dernière sous instruction car, avant cette sous instruction, le processeur n'est pas en mesure de confirmer l'instruction multi-cycle.

On constate donc que, dès que le signal EXP passe à 1, la machine d'état bascule de son état 0 vers l'état 2, ce qui active le signal de commande FSM1. Par conséquent, la valeur précédemment stockée dans le registre 20 (0x10) sera alors, au prochain cycle d'horloge, stockée dans le registre 30 pour y être conservée et recyclée jusqu'au retour de la machine d'état 50 à son état 0.

On parvient ainsi à conserver la valeur 0x10 qui est une adresse de source potentielle, laquelle ne pourra toutefois être confirmée qu'au moment de l'exécution de la dernière sous-instruction (STORE R15) et ce au moyen de l'activation du signal DISC.

On obtient ainsi le déroulement successif de chacune de sous-instructions composant l'instruction multi-cycle PUSH... L'adresse commune à toutes ces sous-instructions, à savoir 0x20, reste présente sur le bus 1 et reste, par conséquent stockée dans le registre 10, alors que le registre 30 conserve la valeur 0x10 qui était l'adresse de source du saut d'adresse.

Lorsque la dernière sous instruction (STORE R15) est traitée, le signal de commande DISC voit son état passer à 1 sous la commande du processeur. La concurrence des états VALID = 1, EXP = 1 et DISC = 1 entraîne alors la commutation de la machine d'état 50 qui revient vers son état 0 et active le signal de commande FSM2, commandant le multiplexeur 80.

La machine d'état 50 génère un signal d'écriture WRITE , entraînant ainsi le stockage du couple (0x10, 0x20) dans la mémoire FIFO 40, ce qui correspond bien à l'adresse de source et de destination du saut effectué.

Ainsi on parvient, grâce à un mécanisme aussi simple qu'efficace, à effectuer le suivi d'une instruction de type Multi-cycle alors même que l'on ne pourra confirmer l'exécution de cette instruction que lors de l'exécution de la dernière sous-instruction composant cette instruction Multi-cycle. C'est à dire lorsque l'on recevra, lors de l'exécution de cette dernière sous instruction, le signal DISC = 1. On parvient ainsi à rendre convenablement compte du saut d'adresse effectué et l'on peut mettre à jour le fichier de suivi de sauts d'adresse.

Comme on le voit, l'invention permet donc la réalisation d'un nouveau mécanisme permettant de générer le fichier BRANCH TRACE lorsque le processeur intègre les instructions évolues de type PREDICATED et MULTI-CYCLE. L'examen minutieux du fichier BRANCH TRACE permet aux programmeurs de suivre le déroulement du programme et ainsi de détecter les erreurs de programmation et de les corriger

## Revendications

1. Dispositif de génération d'un suivi d'adresses de saut pour un microcontrôleur, un microprocesseur ou une unité de traitement d'information doté d'un régime d'instructions comportant au moins une instruction conditionnelle et au moins une instruction de type multi-cycle, ledit dispositif comportant :
- des moyens pour recevoir un premier signal (VALID) représentatif d'une instruction réellement exécutée ;
- des moyens pour recevoir un second signal (EXP) représentatif d'une instruction de type multi-cycle ;
- des moyens pour recevoir un troisième signal (DISC) représentatif d'un saut de discontinuité entre une adresse de source et une adresse de destination d'un programme exécuté dans ledit microcontrôleur, microprocesseur ou ladite unité de traitement.
- des moyens de stockage des adresses consécutives présentées par le pointeur d'adresses (10, 20, 30) ;
- des moyens de traitement (50) desdits premier, second et troisième signal de manière à déterminer, le cas échéant, un couple formé d'une adresse de source et d'une adresse de destination pour un saut d'adresse ;
- des moyens de stockage (40) dudit couple d'adresse.

2. Dispositif selon la revendication 1 **caractérisé en ce qu'**il comporte :
- un premier registre (10) recevant la valeur courante du pointeur d'adresse (1) présentée par ledit microcontrôleur, microprocesseur ou ladite unité de traitement ;
- un second registre (20) disposant d'une entrée et d'une sortie ;
- un premier multiplexeur (60) disposant d'une sortie, d'une première entrée connectée sur la sortie dudit premier registre (10) et d'une seconde entrée connectée sur sa sortie, et étant commandé par ledit signal VALID de manière à permettre soit le stockage du contenu dudit premier registre (10), soit le recyclage de la valeur précédemment stockée dans ledit second registre (20).

3. Dispositif selon la revendication 2 **caractérisé en ce qu'**il comporte :
- un troisième registre (30) disposant d'une entrée et d'une sortie ;
- un second multiplexeur (70) disposant d'une sortie et d'une première entrée connectée à la sortie dudit second registre (20) et d'une seconde entrée connectée sur sa propre sortie, ledit second multiplexeur étant commandé par un premier signal de commande (FSM1) généré par une machine d'état (50).

4. Dispositif selon la revendication 3 **caractérisé en ce qu'**il comporte un troisième multiplexeur (80) disposant d'une première entrée connectée sur la sortie dudit troisième registre (30) et d'une seconde entrée connectée sur la sortie dudit second registre (20), et d'une sortie connectée audit moyen de stockage (40), ledit troisième multiplexeur étant commandé par un second signal de commande (FSM2) généré par ladite machine d'état (50).

5. Dispositif selon la revendication 4 **caractérisé en ce que** ladite machine d'état (50) recevant lesdits premier, second et troisième signaux (VALID, EXP, DISC) est une machine d'état à 3 états générant lesdits premier et second signaux (FSM1, FSM2) de commande du second et troisième multiplexeur, ainsi que le signal d'écriture dans ledit moyen de stockage (40).

6. Dispositif selon la revendication 5 **caractérisé en ce que** ledit moyen de stockage (40) est une mémoire de type FIFO.

7. Dispositif selon la revendication 5 **caractérisé en ce que** ladite machine d'état génère lesdits premier et second signaux (FSM1, FSM2) ainsi que le signal d'écriture (WRITE) suivant les conditions ci-après :
FSM1 étant activé lorsque DISC = 0, VALID = 1, EXP = 1
FSM2 étant activé lorsque FSM = 2 , DISC = 1, VALID = 0, EXP = 1
WRITE étant activé lorsque l'on a la condition suivante: (FSM = 0, VALID = 1, DISCONT = 1) OU (FSM = 1, VALID = 1) OU (FSM = 2, DISC = 1)

8. Microcontrôleur comportant un dispositif de génération d'un suivi d'adresses de saut pour un microcontrôleur, un microprocesseur ou une unité de traitement d'information doté d'un régime d'instructions comportant au moins une instruction conditionnelle et au moins une instruction de type multi-cycle, ledit dispositif comportant :
- des moyens pour recevoir un premier signal (VALID) caractéristique d'une instruction réellement exécutée ;
- des moyens pour recevoir un second signal (EXP) caractéristique d'une instruction de type multi-cycle ;
- des moyens pour recevoir un troisième signal (DISC) caractéristique d'un saut de discontinuité entre une adresse de source et une adresse de destination d'un programme exécuté dans ledit microcontrôleur, microprocesseur ou ladite unité de traitement.
- des moyens de stockage des adresses consécutives présentées par le pointeur d'adresses (10, 20, 30) ;
- des moyens de traitement (50) desdits premier, second et troisième signal de manière à déterminer, le cas échéant, un couple formé d'une adresse de source et d'une adresse de destination pour un saut d'adresse ;
- des moyens de stockage (40) dudit couple d'adresse.
